(19) Europäisches Patentamt
European Patent Office
Office européen des brevets

(11) **EP 3 171 196 A1**

(12) **EUROPÄISCHE PATENTANMELDUNG**

(43) Veröffentlichungstag:
**24.05.2017 Patentblatt 2017/21**

(21) Anmeldenummer: **16197242.7**

(22) Anmeldetag: **04.11.2016**

(51) Int Cl.:
*G01S 5/02* (2010.01)     *G01S 5/06* (2006.01)
*G01S 13/52* (2006.01)     *G01S 13/87* (2006.01)
*G01S 13/93* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **19.11.2015 DE 102015222814**

(71) Anmelder: **ROBERT BOSCH GMBH**
**70442 Stuttgart (DE)**

(72) Erfinder:
• **Freienstein, Heiko**
  **71263 Weil Der Stadt (DE)**

• **Wieland, Jochen**
  **71272 Renningen (DE)**
• **Wahl, Anja**
  **71706 Markgroeningen (DE)**
• **Moennich, Joerg**
  **70437 Stuttgart (DE)**
• **Drews, Florian**
  **71272 Renningen (DE)**
• **Ten Zweege, Remco**
  **71272 Renningen (DE)**
• **Oesterle, Florian**
  **70195 Stuttgart (DE)**
• **Kolatschek, Josef**
  **71263 Weil Der Stadt (DE)**

(54) **VERFAHREN UND VORRICHTUNG ZUM DETEKTIEREN EINER ZUKÜNFTIGEN ANNÄHERUNG ODER EINES ABSTANDS ZWISCHEN ZWEI VERKEHRSTEILNEHMERN**

(57) Die Erfindung betrifft ein Verfahren (500) zum Detektieren einer zukünftigen Annäherung oder eines Abstands zwischen zwei Verkehrsteilnehmern, wobei das Verfahren einen Schritt (502) des Erkennens, einen Schritt (504 des Bestimmens) und einen Schritt (506) des Ermittelns aufweist. Im Schritt (502) des Erkennens werden ein erstes Signal (208) und zumindest ein zweites Signal (210) in einem empfangenen elektromagnetischen Spektrum erkannt. Dabei repräsentieren das erste Signal (208) und das zweite Signal (210) ein von einem Verkehrsteilnehmer (110) emittiertes und/oder reflektiertes elektromagnetisches Signal (116). Im Schritt (504) des Bestimmens wird zumindest eine physikalische Größe (212) zwischen dem Verkehrsteilnehmer (110) und einer das Spektrum empfangenden Empfangseinrichtung (118) unter Verwendung des ersten Signals (208) und des zweiten Signals (210) bestimmt. Im Schritt (506) des Ermittelns wird die potenzielle Unfallsituation unter Verwendung der physikalischen Größe (212) ermittelt.

**Fig. 1**

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Die JP 2011007560 A beschreibt einen passiven Radarempfänger.

Offenbarung der Erfindung

Vor diesem Hintergrund werden mit dem hier vorgestellten Ansatz ein Verfahren zum Detektieren einer potenziellen Unfallsituation, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

In Straßenfahrzeugen wird in zunehmendem Ausmaß Radartechnik verbaut. Dadurch senden diese Straßenfahrzeuge nahezu kontinuierlich Radarsignale beziehungsweise elektromagnetische Wellen in ihre Umgebung. Elektromagnetische Wellen breiten sich von ihrem Sender in alle Raumrichtungen aus. Reflexionen beziehungsweise Echos der elektromagnetischen Wellen werden in einem Radargerät im Allgemeinen jedoch nur aus einer bestimmten Richtung empfangen und zur weiteren Signalverarbeitung verwendet. Eventuell empfangene Echos aus anderen Richtungen werden aus einem Nutzsignal ausgefiltert, um die Echos aus der gewünschten Richtung zu verbessern.

Bei dem hier vorgestellten Ansatz wird ausgenutzt, dass sich die elektromagnetischen Wellen der Radargeräte in Straßenfahrzeugen in alle Richtungen ausbreiten. Dadurch kann ein Sender von elektromagnetischen Wellen beziehungsweise ein Straßenfahrzeug mit einem solchen Sender aus vielen Richtungen erkannt werden.

Es wird ein Verfahren zum Detektieren einer zukünftigen Annäherung oder eines Abstands zwischen zwei Verkehrsteilnehmern vorgestellt, wobei das Verfahren die folgenden Schritte aufweist:

Erkennen eines ersten Signals und zumindest eines (insbesondere dem ersten Signal ähnlichen) zweiten Signals in einem empfangenen elektromagnetischen Spektrum, wobei das erste Signal und das zweite Signal ein von einem Verkehrsteilnehmer emittiertes oder reflektiertes elektromagnetisches Signal repräsentieren;

Bestimmen zumindest einer physikalischen Größe zwischen dem Verkehrsteilnehmer und einer das Spektrum empfangenden Empfangseinrichtung unter Verwendung des ersten Signals und des zweiten Signals; und

Ermitteln der potenziellen Unfallsituation unter Verwendung der physikalischen Größe.

Dieses Verfahren kann beispielsweise in Software oder Hardware oder in einer Mischform aus Software und Hardware beispielsweise in einem Steuergerät implementiert sein.

Unter einer zukünftigen Annäherung oder einem Abstand zwischen zwei Verkehrsteilnehmern kann ein Hinweis auf eine potenzielle Unfallsituation verstanden werden, bei der die Fahrzeuge näher als ein Sicherheitsabstand beieinander erkannt werden. Bei einer potenziellen Unfallsituation steht noch nicht fest, dass tatsächlich ein Unfall stattfindet, da zumeist noch eine Reaktionsmöglichkeit besteht. Ein Signal kann charakteristisch für einen Sender sein. Beispielsweise kann das Signal ein Impuls oder eine Impulsfolge sein. Beispielsweise kann der Sender zur Erzeugung des Signals einen oder mehrere Impulse mit einer bestimmten Frequenz oder in bestimmten Intervallen senden. Eine Empfangseinrichtung kann eine oder mehrere Antennen aufweisen und zumindest ein, das empfangene elektromagnetische Spektrum abbildendes Empfangssignal bereitstellen. Die erkannten Signale unterscheiden sich in zumindest einem Merkmal wie eine Frequenz, ein Zeitversatz oder ein Impulsmuster bzw. eine Abfolge von Impulsen. Dieses Merkmal kann verwendet werden, um beispielsweise eine Entfernung, eine Richtung und alternativ oder ergänzend eine Relativgeschwindigkeit zwischen der Empfangseinrichtung und dem Verkehrsteilnehmer zu bestimmen. Unter einer physikalischen Größe kann vorliegend beispielsweise ein Abstand, eine Position eines oder mehrerer erkannter Objekte in einer Umgebung eines Fahrzeugs, eine Zeit, eine Geschwindigkeit eines oder mehrerer erkannter Objekte oder eine andere mit einem Sensor erfassbare physikalische Größe verstanden werden.

Die physikalische Größe kann unter Verwendung eines Zeitversatzes des zweiten Signals zu dem ersten Signal bestimmt werden. Ein Zeitversatz repräsentiert einen längeren Weg, den das später erkannte Signal in Bezug zum zuerst erkannten Signal zurückgelegt hat. Durch den Zeitversatz kann ein Entfernungsunterschied zwischen dem längeren Weg und einem kürzeren Weg des zuerst erkannten Signals ermittelt werden. Der Zeitversatz kann einfach bestimmt werden.

Die physikalische Größe kann unter Verwendung einer Frequenzverschiebung des zweiten Signals zu dem ersten Signal bestimmt werden. Eine Frequenzverschiebung repräsentiert, dass ein Objekt an welchem das zweite Signal reflektiert worden ist, eine Relativgeschwindigkeit zu der Empfangseinrichtung aufweist. Durch das Bestimmen der physikalischen Größe über die Frequenzverschiebung können bewegte Objekte, die keine elektromagnetischen Wellen emittieren, erkannt werden.

Die physikalische Größe kann unter Verwendung einer Intensitätsdifferenz des zweiten Signals zu dem ersten Signal bestimmt werden. Eine Intensitätsdifferenz zwischen den Signalen wird durch die Differenz zwischen den Empfangsintensitäten bzw. Absolutwerten der empfangenen Signale gebildet und resultiert aus einem Entfernungsunterschied zwischen einem längeren Weg und einem kürzeren Weg, den die Signale durchlaufen. Die Intensitätsdifferenz kann sicher bestimmt werden.

Die physikalische Größe kann unter Verwendung von zumindest einem Interferenzparameter des zweiten Signals in Bezug zum ersten Signal bestimmt werden. Ein solcher Interferenzparameter kann beispielsweise durch eine Überlagerung bzw. Summation von Amplituden von Signalen des ersten und zweiten Signals resultieren. Der Interferenzparameter kann somit als ein Verschiebungsgrad verstanden werden, der erforderlich ist, um die eine empfangene Impulssequenz aus einer Addition des ersten und zweiten Signals zu erhalten, die in einem resultierenden Signalempfangssignal münden und hier Interferenzeffekte verursachen. Diese Interferenzeffekte resultieren durch einen Unterschied zwischen einem längeren Weg und einem kürzeren Weg, den die Signale zurückgelegt haben. Unter Verwendung der Interferenzeffekte kann ein sehr geringer Unterschied der Wege analysiert werden.

Das erste Signal kann in einem ersten Empfangssignal einer ersten Antenne der Empfangseinrichtung erkannt werden. Das zweite Signal kann in einem zweiten Empfangssignal einer zu der ersten Antenne beabstandeten zweiten Antenne der Empfangseinrichtung erkannt werden. Durch eine Verwendung von mehreren Antennen kann eine Richtung zu einem Sender der elektromagnetischen Wellen ermittelt werden. Unter Verwendung der Richtung der empfangenen Signale kann eine Unterscheidung zwischen auszuwertenden Signalen und Störsignalen erfolgen.

Das Verfahren kann einen Schritt des Bereitstellens eines Warnsignals aufweisen. Das Warnsignal kann bereitgestellt werden, wenn die physikalische Größe eine vorbestimmte Beziehung zu einem Schwellenwert aufweist. Unter einer vorbestimmten Beziehung der physikalischen Größe zu einem Schwellenwert kann beispielsweise verstanden werden, dass die physikalische Größe den Schwellenwert überschreitet, unterschreitet oder gleich dem Schwellenwert ist. Ein Warnsignal kann ein elektrisches Signal sein. Das Warnsignal kann in einem Fahrerassistenzsystem verwendet werden. Das Warnsignal kann auch ein akustisches oder optisches Signal für einen Verkehrsteilnehmer sein, um seine Aufmerksamkeit auf die potenzielle Unfallsituation zu lenken. Dadurch können Unfälle vermieden werden. Denkbar ist ferner, dass das Warnsignal auch einer Fahrerassistenzeinheit zur Verfügung gestellt wird, welche selbst ausgebildet ist, um Eingriffe in die Fahrzeugführung vorzunehmen und hierdurch den Fahrer zu entlasten, um die Sicherheit im Fahrverhalten des Fahrzeugs zu erhöhen.

Das Verfahren kann einen Schritt des Sendens eines Radarsignals aufweisen. Im Schritt des Erkennens kann in dem empfangenen Spektrum ein (beispielsweise dem Radarsignal ähnliches) Echo erkannt werden. Im Schritt des Bestimmens kann die physikalische Größe unter Verwendung des Radarsignals und des Echos bestimmt werden. Unter einem Radarsignal können elektromagnetische Wellen verstanden werden. Ein Echo des Radarsignals kann von der Empfangseinrichtung empfangen werden. Der Schritt des Sendens kann ausgesetzt werden. In Sendepausen können passiv elektromagnetische Wellen von anderen Sendern empfangen und ausgewertet werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch die Vorrichtung eine Steuerung eines Fahrerassistenzsystems. Hierzu kann die Vorrichtung beispielsweise auf Sensorsignale wie ein das elektromagnetische Spektrum abbildende Empfangssignal zugreifen. Die Ansteuerung erfolgt über elektronische Signale, die beispielsweise eine Ausweichbewegung oder einen selbsttätigen Bremsvorgang ansteuern.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1 eine Darstellung eines Motorrads mit einer Vorrichtung gemäß einem Ausführungsbeispiel;

Fig. 2 ein Blockschaltbild einer Vorrichtung zum Detektieren einer potenziellen Unfallsituation gemäß einem Ausführungsbeispiel;

Fig. 3 eine Darstellung einer Entfernungsschätzung gemäß einem Ausführungsbeispiel;

Fig. 4 eine Darstellung einer Richtungsmessung gemäß einem Ausführungsbeispiel; und

Fig. 5 ein Ablaufdiagramm eines Verfahrens zum Detektieren einer potenziellen Unfallsituation gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

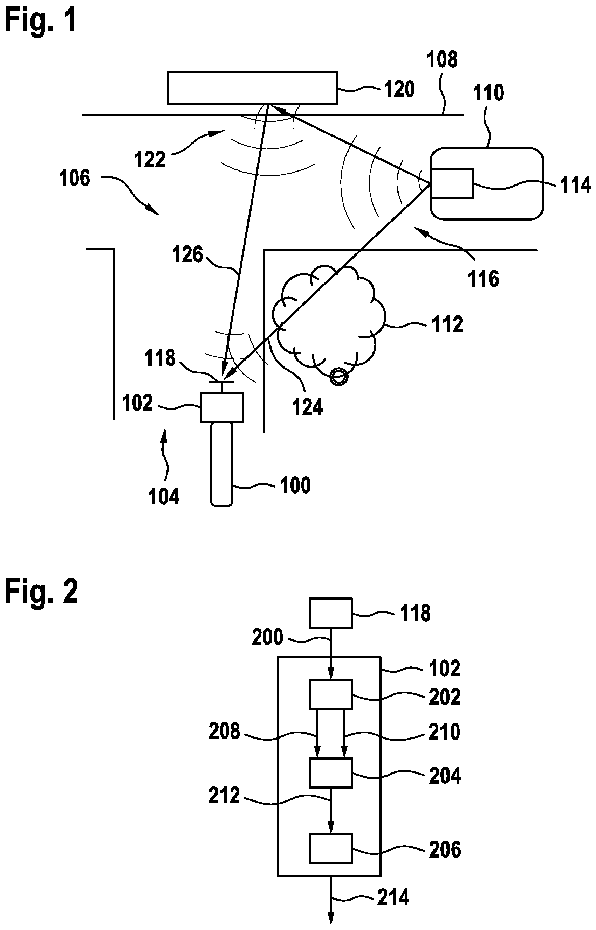

Fig. 1 zeigt eine Darstellung eines Motorrads 100 mit einer Vorrichtung 102 gemäß einem hier vorgestellten Ausführungsbeispiel. Das Motorrad 100 fährt auf einer Straße 104 auf eine Straßenkreuzung 106 zu. Von rechts kommt auf einer kreuzenden Straße 108 ein Fahrzeug 110. Von dem Motorrad 100 aus ist das Fahrzeug 110 durch ein Objekt 112, wie beispielsweise einem Baum, verdeckt. Ein Fahrer des Motorrads 100 kann das Fahrzeug 110 dadurch nicht erkennen. Wenn der Fahrer das Fahrzeug 110 zu spät erkennt, besteht eine zukünftige Annäherung oder eines Abstands zwischen zwei Verkehrsteilnehmern bzw. eine potenzielle Unfallsituation.

Das Fahrzeug 110 weist ein Radargerät 114 auf. Das Radargerät 114 emittiert elektromagnetische Wellen 116 in Fahrtrichtung des Fahrzeugs 110. Dadurch kann das Radargerät 114 Objekte vor dem Fahrzeug 110 erkennen und so beispielsweise eine Hindernisinformation für einen Bremsassistenten des Fahrzeugs 110 bereitstellen. Das Radargerät 114 kann jedoch das Motorrad 100 auf der von dem Fahrzeug 110 aus links in die Kreuzung 106 einmündenden Straße 104 nicht erfassen. Die elektromagnetischen Wellen 116 jedoch breiten sich von dem Radargerät 114 näherungsweise halbkugelförmig aus und sind durch die Vorrichtung 102 empfangbar. Dazu weist die Vorrichtung 102 zum Detektieren der zukünftigen Annäherung oder eines Abstands zwischen zwei Verkehrsteilnehmern bzw. der potenziellen Unfallsituation eine Antenne 118 zum Empfangen der elektromagnetischen Wellen 116 auf.

Das Radargerät 114 sendet die elektromagnetischen Wellen gepulst, um Echos von Objekten vor dem Fahrzeug 110 empfangen zu können und unter Verwendung der Echos beispielsweise eine Entfernung zu den Objekten zu ermitteln. Die elektromagnetischen Wellen 116 werden auch in andere Richtungen, als zu dem Fahrzeug 110 zurück von Objekten 120, wie beispielsweise eine Gebäudewand, reflektiert. Dabei werden die Reflexionen 122 auch von der Antenne 118 empfangen.

Die Antenne 118 stellt ein Empfangssignal bereit, das ein Spektrum der elektromagnetischen Wellen am Ort der Antenne 118 abbildet. In dem Spektrum oder einem entsprechenden Zeitreihensignal ist das Signal des Radargeräts 114 erkennbar. Dabei erreicht ein erstes Signal auf einem direkten Weg 124 zwischen dem Fahrzeug 110 und dem Motorrad 100 die Antenne 118 früher, als ein zweites Signal auf einem indirekten Weg 126 von dem Fahrzeug 110 über das Objekt 120 zu dem Motorrad 100. Die beiden Signale weisen also einen Zeitversatz zueinander auf. Beide Signale sind in dem Spektrum bzw. einem entsprechenden Zeitreihensignal erkennbar, wobei die Signale über den indirekten Weg 126 eine geringere Intensität bzw. Amplitude aufweist, als die Signale, die über den direkten Weg 124 von der Antenne 118 empfangen wird. Basierend auf dem Zeitversatz und alternativ oder ergänzend auf dem Intensitätsunterschied zwischen den Signalen ist die Vorrichtung 102 dazu ausgebildet, eine Entfernungsänderung zwischen dem Motorrad 100 und dem Fahrzeug 110 zu ermitteln. Die Entfernungsänderung kann auch als Relativgeschwindigkeit zwischen dem Fahrzeug 110 und dem Motorrad 100 bezeichnet werden. Wenn die Entfernungsänderung größer als ein kritischer Wert ist, erkennt die Vorrichtung 102 die potenzielle Unfallsituation.

In einem Ausführungsbeispiel ist die Vorrichtung 102 dazu ausgebildet, selbst elektromagnetische Wellen 116 zu emittieren. Dadurch kann die Vorrichtung 102 wie das Radargerät 114 des Fahrzeugs 110 Objekte vor dem Motorrad 100 erkennen. Dabei wechselt die Vorrichtung 102 zyklisch ihren Betriebsmodus von Senden und Empfangen zu ausschließlich Empfangen, wie vorhergehend beschrieben. Dadurch können weiterhin potenzielle Unfallsituationen erkannt werden, die durch direkte Echos der elektromagnetischen Wellen 116 an Objekten, wie beispielsweise dem Objekt 120, nicht erkannt werden können.

Unter Passiv-Radar kann die Ortung von Objekten verstanden werden, wobei nur eine Empfangseinheit 118 eingesetzt wird und ein bekannter Funkmast, wie beispielsweise Radio, Fernsehen, Mobilfunk oder das Radargerät 114 als Sendeeinheit verwendet wird. Aus den Unterschieden zwischen dem direkt empfangenen Signal 124 und dem am Objekt reflektierten Signal 126 kann auf den Ort des Objekts 110 geschlossen werden. Allein aus einem lauschenden Radarempfänger 102, der nicht sendet, werden Informationen über ein bewegtes Objekt 110 gewonnen. Hierzu werden direkte Signale 124 mit reflektierten Signalen 126 verglichen und in Positionen umgerechnet.

Bei dem hier vorgestellten Ansatz ist der Sender 114 unbekannt, es wird die Position des Senders 114 ermittelt.

Radarsensorik 114 für PKW findet weite Verbreitung. Autonome Notbremsassistenten (Autonomous Emergency Braking), die im Falle eines drohenden Unfalls durch eine Bremsung des eigenen Fahrzeugs 110 den Unfall vermeiden können werden in Fahrzeugen 110 verbaut. Zukünftig werden sehr viele PKW 110 ein frontales Radar 114 besitzen, mit dem sie den unmittelbaren Fahrschlauch überwachen. Bei dem hier vorgestellten Ansatz wird sich diese Situation zu eigen gemacht, indem das Prinzip des passiven Radars eingesetzt wird.

Dabei wird eine Anordnung von passiven Radar-Einheiten 102, das heißt Empfängereinheiten für Zweiräder und auch leichte Fahrzeuge vorgestellt, die eine PreCrash Situation erkennen können. In einem Ausführungsbeispiel erfolgt ein Verzicht auf eine aktive Sende-Einheit. Es werden lediglich Radar-Signale 116 von anderen Verkehrsteilnehmern 110 empfangen.

Beispielsweise kann eine Kollisionswarnung oder ein Eingriff in eine Kreuzungssituation erfolgen, falls Radar-Impulse 116 von dem querenden Fahrzeug 110 erkannt und als kollisionsrelevant klassifiziert wurden. Hierbei kann der Fahrer des Fahrzeuges 100 mit passivem Radar gewarnt oder informiert werden. In einem Ausführungsbeispiel sendet die Vorrichtung selbst optische Signale aus, um den potenziellen Kollisionsgegner 110 zu warnen und alternativ oder ergänzend zu informieren. Technische Grundlage ist eine Auswertung von Entfernung, Richtung und Relativ-Geschwindigkeit. Dabei können Zusatzinformationen über Infrastrukturschnittstellen verwendet werden.

Die Vorteile von passivem Radar sind geringe Kosten, da keine Sendeeinheit benötigt wird und eine fehlende Kühlproblematik beziehungsweise Entwärmung, daher sind sehr hohe Abtastraten möglich. Weiterhin können bestimmte Ziele, wie beispielsweise teilverdeckte oder verdeckte Objekte 110 über reflektierte Signale 126 durch passives Radar besser detektiert werden.

Wie in Fig. 1 dargestellt nähert sich das Fahrzeug 110 mit dem Radarsender 114 dem Motorrad 100. Wird das Signal 116 vom passiven Radar 118 empfangen, so können auf verschiedene Weisen Informationen über Distanz, Annäherungswinkel und Azimut gewonnen werden.

Sichtverdeckungen können identifiziert werden. Liegt aus Karteninformationen oder über eine Infrastrukturschnittstelle die Information einer Kreuzung 106 vor, so kann ein empfangenes Radarsignal 116, welches über Reflexionen an Gebäuden 120 empfangen wurde, genutzt werden, um eine Fahrerinformation zu generieren, beispielsweise eine Warnung, wie "Fahrzeug 110 nähert sich schnell aus einer verdeckten Situation heraus".

Mehrere Quellen und deren geschätzter Bewegungszustand können in ein gemeinsames Gleichungssystem einfließen und ein Ausgleichsproblem lösen. Das Ergebnis ist eine zweidimensionale Darstellung (x,y-Abstand) aller sendenden und nicht-sendenden Objekte mit Bewegungsstatus.

In einem Ausführungsbeispiel werden mindestens zwei Signale eines Radar-Senders 114 empfangen, wobei das erste Signal 124 ein direkt beziehungsweise geradlinig den Empfänger 118 erreichendes Signal ist. Das zweite Signal 126 ist ein Signal welches den Empfänger 118 über eine bestimmte Reflexion erreicht. Falls nun die Position des Senders 114 bekannt ist, beispielsweise über eine zeitnah erfolgte Übertragung durch eine Infrastrukturschnittstelle oder über eine Positionsinformation, die als Modulation dem Radar Signal 116 aufgeprägt ist, kann rechnerisch eine Abschätzung der möglichen Position des reflektierenden Hindernisses 120 erfolgen. Die eigene Position kann als der erste Brennpunkt einer Ellipse angesehen werden, die Position des Senders 114 kann als der zweite Brennpunkt einer Ellipse angesehen werden. Die Bahnkurve der Ellipse ist dann die Menge derjenigen Punkte P für die gilt: A1 + A2 = K, wobei A1 der Abstand des ersten Brennpunkts zum Punkt P ist, A2 der Abstand des zweiten Brennpunkts zum Punkt P ist, und K eine Konstante ist, die sich direkt aus dem Laufzeitunterschied zwischen direktem und reflektierten Signal ergibt.

Die Punkte der Bahnkurve P der so berechneten Ellipse sind nun die Punkte, auf denen sich das reflektierende Objekt 120 irgendwo befinden muss.

Anschaulich kann in der Position des ersten Brennpunkts beziehungsweise des Empfängers 118 ein Nagel platziert werden, ebenso kann in der Position des zweiten Brennpunkts beziehungsweise des Senders 114 ein Nagel platziert werden. Der Abstand zwischen diesen beiden beträgt L. Nun wird eine Leine genommen, deren Länge um genauso viel länger als der Abstand L ist, wie es dem Laufzeitunterschied zwischen den Signalen 124, 126 bei gegebener Ausbreitungsgeschwindigkeit entspricht. Dies ist die Länge K. Nun wird die Leine an den Nägeln befestigt und mit einem Markierstift wird die Bahnkurve der Ellipse gezeichnet, indem der Stift immer an der gespannten Leine K entlanggeführt wird, was dem Konstruktionsprinzip einer Ellipse unter Verwendung der Gärtner-Konstruktion entspricht.

Die Bestimmung des Objektes 120 kann dadurch verbessert werden, indem zeitlich aufeinanderfolgend mehrere Signaltupel direkt und reflektiert ausgewertet werden. Durch die Eigenbewegung der Sendeeinheit 114 und alternativ oder ergänzend der Empfangseinheit 118 ändert sich die Lage der Brennpunkte und damit die Position der Bahnkurve. Der Schnittpunkt der so aufeinanderfolgend erhaltenen Bahnkurven gibt die Position des reflektierenden Objektes 120 an.

Durch Auswertung der Frequenzverschiebung zwischen direktem und reflektiertem Signal kann auf die Eigenbewegung des reflektierenden Objekts 120 geschlossen werden.

Statt zeitlich aufeinanderfolgende Signaltupel können auch die Signale 124, 126, die ihren Ursprung in einem anderen, räumlich getrennten, unabhängigen Sender 114 haben, mit denen der ersten Messung in analogem Verfahren kombiniert werden.

Durch eine Kombination von zeitlich aufeinanderfolgenden Signaltupel und mehreren räumlich getrennten Sendeeinheiten kann eine Umgebungsinformation mit hoher räumlicher Auflösung nach dem beschriebenen Verfahren berechnet werden.

Zusätzlich zu der ersten Reflexion R1 können auch beliebig weitere Reflexionen R2 bis Rn auf die beschriebene Weise ausgewertet werden. Ein unterschiedliches Delay dieser Reflexionen zur Ersten und zueinander führt zu einem anderen Wert K und damit zu anderen Ellipsenbahnkurven, die dann analog Informationen zu weiteren Reflektoren enthalten.

Falls die Position der Sendeeinheit 114 nicht bekannt ist, kann durch die Kombination mehrerer Messungen trotzdem ein angenähertes Bild der Umgebung errechnet werden. Die Position des zweiten Brennpunkts geht dann als zunächst unbekannt in ein durch mehrere Messungen festgelegtes Gleichungssystem ein und kann durch Lösen desselben berechnet werden.

Die Vorrichtung 102 kann als passives Radar bezeichnet werden und beispielsweise ein Radom, eine Antenne 118 und eine Verarbeitungseinheit umfassen.

In einem Ausführungsbeispiel erfolgt eine Integration der Passiv-Radar-Funktionalität in ein, aktives, sendendes und empfangendes Radar-System als Kombilösung. Dabei wird eine erweiterte Sendepause eingeführt. Durch temporäres Umschalten auf exklusives Empfangen von Fremdradar-Signalen 116, die nicht vom eigenen System 102 ausgesendet wurden. Da auch ein Radar-System zyklisch sendet und sämtliche Radar-Reflexe empfängt, bezeichnet die erweiterte Sendepause jeweils eine Zeitscheibe beziehungsweise ein Zeitschlitz, in der ausschließlich Fremdradar-Signale 116 empfangen werden. Der Empfang von Reflexionen der eigenen gesendeten Signalanteile kann durch zeitliche Trennung ausgeschlossen beziehungsweise über entsprechende Signalfilterung eliminiert werden.

Der hier vorgestellte Ansatz kann über Zweiräder hinaus verwendet werden. Beispielsweise kann das hier vorgestellte Passiv-Radar für Fußgänger beziehungsweise ungeschützte Verkehrsteilnehmer allgemein verwendet werden (vulnerable road users). Das Passiv-Radar-System 102 kann beispielsweise in Kleidung (Wearables), Schulranzen, Rucksäcke, Kinderwagen, Rollatoren oder Rollstühle integriert werden. Dabei kann das Passiv-Radar in Körpernähe getragen werden, da keine Strahlung aktiv emittiert wird.

Fig. 2 zeigt ein Blockschaltbild einer Vorrichtung 102 zum Detektieren einer zukünftigen Annäherung oder eines Abstands zwischen zwei Verkehrsteilnehmern gemäß einem Ausführungsbeispiel. Die Vorrichtung 102 entspricht dabei im Wesentlichen der Vorrichtung in Fig. 1. Wie in Fig. 1 ist die Vorrichtung 102 mit einer Empfangseinrichtung 118 verbunden. Von der Empfangseinrichtung 118 liest die Vorrichtung 102 das Empfangssignal 200 ein, in dem das empfangene elektromagnetische Spektrum abgebildet ist.

Die Vorrichtung 102 weist eine Erkennungseinrichtung 202, eine Bestimmungseinrichtung 204 und eine Ermittlungseinrichtung 206 auf. In der Erkennungseinrichtung 202 wird das Empfangssignal 200 eingelesen und analysiert. Dabei werden ein erstes Signal 208 und zumindest ein dem ersten Signal ähnliches zweites Signal 210 in dem elektromagnetischen Spektrum erkannt. Beispielsweise repräsentiert das erste Signal 208 das Signal von dem Fahrzeug auf dem direkten Weg, während das zweite Signal 210 das Signal auf dem indirekten Weg repräsentiert.

Die Bestimmungseinrichtung 204 ist dazu ausgebildet, unter Verwendung des ersten Signals 208 und des zweiten Signals 210 zumindest eine physikalische Größe 212 zwischen einem Sender der Signale 208, 210 und der Empfangseinrichtung 118 zu bestimmen. Beispielsweise ist die Bestimmungseinrichtung 204 dazu ausgebildet, die Entfernungsänderung zwischen dem Fahrzeug und dem Motorrad in Fig. 1 zu bestimmen.

Die Ermittlungseinrichtung 206 ist dazu ausgebildet, unter Verwendung der physikalischen Größe 212 die potenzielle Unfallsituation zu ermitteln. Wenn die Ermittlungseinrichtung 206 eine potenzielle Unfallsituation erkennt, wird von der Vorrichtung 102 ein Warnsignal 214 bereitgestellt.

Das Abstandsgesetz der Intensität kann verwendet werden, wenn die Leistung des Senders konstant ist. Die Intensität I des empfangenen Signals ist eine Funktion des Radius r. Für einen Kugelstrahler im Freien Feld gilt beispielsweise $I(r) \sim 1/r^2$. Bei bekannter Intensität des Strahlers $I_0$ kann der Abstand direkt bestimmt werden. Falls die Intensität nicht bekannt ist, so kann aus drei aufeinanderfolgenden Messungen der Abstand und die Geschwindigkeit geschätzt werden. Weitere Messungen führen zu einer Überbestimmung des Gleichungssystems und können in einer Ausgleichsrechnung zu einer verbesserten Genauigkeit führen.

Unbekannt: Intensität des Strahlers $I_0$
Unbekannt/gesucht: Abstand $r_{t=0}$ und v.
Ansatz: Lösung des nicht-linearen Gleichungssystems mit drei Unbekannten.

$$\text{(i)} \quad I_{t=0} = I_0 \cdot \frac{1}{r_{t=0}^2}$$

$$\text{(ii)} \quad I_{t=\Delta t} = I_0 \cdot \frac{1}{\left(r_{t=0} + v \cdot \Delta t\right)^2}$$

$$\text{(iii)} \quad I_{t=2\Delta t} = I_0 \cdot \frac{1}{\left(r_{t=0} + 2v \cdot \Delta t\right)^2}$$

$I_{t=0}$; $I_{t=\Delta t}$; $I_{t=2\Delta t}$ Empfangene Intensität zu den Zeitpunkten $t = \{0; \Delta t; 2\Delta t\}$

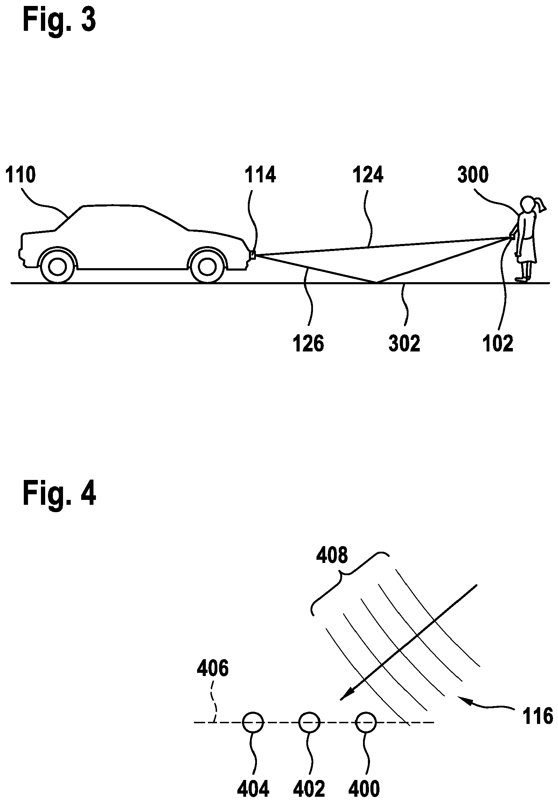

Fig. 3 zeigt eine Darstellung einer Entfernungsschätzung gemäß einem Ausführungsbeispiel. Die Darstellung entspricht dabei im Wesentlichen der Darstellung in Fig. 1. Im Gegensatz dazu wird die Vorrichtung 102 als Warngerät von einem Fußgänger 300 getragen. Hier verläuft der indirekte Weg 126 vom Fahrzeug 110 über einen Untergrund 302 zu der Vorrichtung 102. Da näherungsweise bekannt ist, in welcher Höhe das Radargerät 114 am Fahrzeug 110 angebracht ist, kann die Entfernungsschätzung durchgeführt werden. Zusätzlich kann angenommen werden, dass die Vorrichtung 102 ebenso in einer bekannten Höhe angeordnet ist. Durch diese Rahmenbedingungen ergibt sich ein Bereich, in dem der Entfernungsunterschied zwischen dem direkten Weg 124 und dem indirekten Weg 126 liegen muss. Ergebnisse außerhalb dieses Bereichs können ignoriert werden.

Die Entfernung kann unter Ausnutzung von Interferenzeffekten ermittelt werden. Ein Signal wird auf direktem Wege 124 und ferner über eine Bodenreflexion 126 übertragen. Aus dem sich ergebenden Interferenzverhalten sowie Annahmen über die Höhe des Sensors 102 kann der Abstand der Quelle 114 geschätzt werden.

Unterschiedliche Laufwege von direkter Strahlung 124 und Bodenreflexion 126 führen zu Interferenzeffekten, die mit dem empfangenen passiven Radar 102 aufgezeichnet und ausgewertet werden können.

Fig. 4 zeigt eine Darstellung einer Richtungsmessung gemäß einem Ausführungsbeispiel. Hier weist die Empfangseinrichtung drei Antennen 400, 402, 404 auf, die beabstandet zueinander nebeneinander angeordnet sind. Die Antennen 400, 402, 404 bilden so eine Bezugslinie 406. Treffen nun die elektromagnetischen Wellen 116 unter einem Winkel auf die Antennen 400, 402, 404, so erreicht das Signal 408 zuerst die erste Antenne 400, dann die zweite Antenne 402 und zuletzt die dritte Antenne 404. Dadurch ergibt sich ein Zeitversatz zwischen den in den Empfangssignalen der Antennen 400, 402, 404 abgebildeten Signalen. Dieser Zeitversatz ist direkt proportional zu dem Winkel, unter dem die elektromagnetischen Wellen 116 auf die Bezugslinie 406 treffen.

Mit anderen Worten ist in Fig. 4 das Prinzip der Peilung dargestellt. Ähnlich wie beim Richtungshören des Menschen kann der Annäherungswinkel beziehungsweise Azimut aus Phasenunterschieden des einfallenden Signals 116 auf ein Empfängerarray 400, 402, 404 rekonstruiert werden. Aus zwei aufeinanderfolgenden Peilungen kann die Position ermittelt werden. Dabei empfängt ein Array von mindestens zwei Elementen 400, 402 ein Radar-Signal 116, das in der Näherung eine ebene Welle ist. Aus der Korrelationsanalyse der Empfangssignale der Array-Elemente 400, 402, 404 kann die Einfallsrichtung der Welle bestimmt werden.

Bei bekannter Modulation des Sensors, beispielsweise durch einen Vergleich der empfangenen Signale 116 mit den auf einer Speichereinheit verfügbaren Radarmodulationen gängiger Systeme, oder bei einfachen Modulationsschemen, wie einem Dauerstrich Schema (CW), kann die Dopplerverschiebung und somit die Relativgeschwindigkeit ermittelt werden.

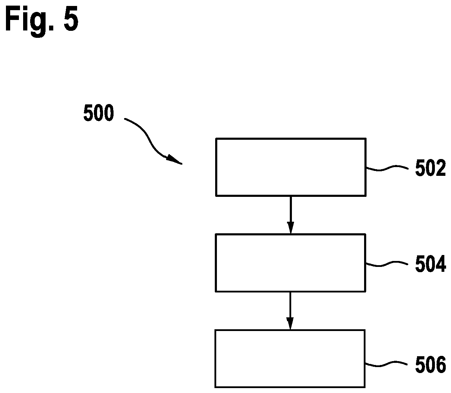

Fig. 5 zeigt ein Ablaufdiagramm eines Verfahrens 500 zum Detektieren einer zukünftigen Annäherung oder eines Abstand zwischen zwei Verkehrsteilnehmern gemäß einem Ausführungsbeispiel. Das Verfahren kann auf einer Vorrichtung, wie sie beispielsweise in Fig. 2 dargestellt ist, ausgeführt werden. Das Verfahren 500 weist einen Schritt 502 des Erkennens, einen Schritt 504 des Bestimmens und einen Schritt 506 des Ermittelns auf. Im Schritt 502 des Erkennens werden ein erstes Signal und zumindest ein zweites Signal in einem empfangenen elektromagnetischen Spektrum erkannt. Dabei repräsentieren das erste Signal und das zweite Signal ein von einem Verkehrsteilnehmer emittiertes und/oder reflektiertes elektromagnetisches Signal. Im Schritt 504 des Bestimmens wird zumindest eine physikalische Größe zwischen dem Verkehrsteilnehmer und einer das Spektrum empfangenden Empfangseinrichtung unter Verwendung des ersten Signals und des zweiten Signals bestimmt. Im Schritt 506 des Ermittelns wird die potenzielle Unfallsituation unter Verwendung der physikalischen Größe ermittelt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (500) zum Detektieren einer zukünftigen Annäherung oder eines Abstands zwischen zwei Verkehrsteilnehmern, wobei das Verfahren die folgenden Schritte aufweist:

Erkennen (502) eines ersten Signals (208) und zumindest eines zweiten Signals (210) in einem empfangenen elektromagnetischen Spektrum, wobei das erste Signal (208) und das zweite Signal (210) ein von einem Verkehrsteilnehmer (110) emittiertes und/oder reflektiertes elektromagnetisches Signal (116) repräsentieren;
Bestimmen (504) zumindest einer physikalischen Größe (212) zwischen dem Verkehrsteilnehmer (110) und einer das Spektrum empfangenden Empfangseinrichtung (118) unter Verwendung des ersten Signals (208) und des zweiten Signals (210); und
Ermitteln (506) der potenziellen Unfallsituation unter Verwendung der physikalischen Größe (212).

2. Verfahren (500) gemäß Anspruch 1, bei dem im Schritt (504) des Bestimmens als physikalische Größe (212) eine Entfernung, eine Richtung und/oder eine Relativgeschwindigkeit zwischen der Empfangseinrichtung (118) und dem Verkehrsteilnehmer (110) bestimmt wird.

3. Verfahren (500) gemäß einem der vorangegangenen Ansprüche, bei dem im Schritt (504) des Bestimmens die physikalische Größe (212) unter Verwendung eines Zeitversatzes des zweiten Signals (210) zu dem ersten Signal (208) bestimmt wird.

4. Verfahren (500) gemäß einem der vorangegangenen Ansprüche, bei dem im Schritt (504) des Bestimmens die physikalische Größe (212) unter Verwendung einer Frequenzverschiebung des zweiten Signals (210) zu dem ersten Signal (208) bestimmt wird.

5. Verfahren (500) gemäß einem der vorangegangenen Ansprüche, bei dem im Schritt (504) des Bestimmens die physikalische Größe (212) unter Verwendung einer Intensitätsdifferenz des zweiten Signals (210) zu dem ersten Signal (208) bestimmt wird.

6. Verfahren (500) gemäß einem der vorangegangenen Ansprüche, bei dem im Schritt (504) des Bestimmens die physikalische Größe (212) unter Verwendung von zumindest einem Interferenzparameter des zweiten Signals (210) in Bezug zum ersten Signal (208) bestimmt wird.

7. Verfahren (500) gemäß einem der vorangegangenen Ansprüche, bei dem im Schritt (502) des Erkennens das erste Signal (208) in einem ersten Empfangssignal einer ersten Antenne (400) der Empfangseinrichtung (118) und das zweite Signal (210) in einem zweiten Empfangssignal einer zu der ersten Antenne (400) beabstandeten zweiten Antenne (402) der Empfangseinrichtung (118) erkannt wird.

8. Verfahren (500) gemäß einem der vorangegangenen Ansprüche, mit einem Schritt des Bereitstellens eines Warnsignals (214), wenn die physikalische Größe (212) eine vorbestimmte Beziehung zu einem Schwellenwert aufweist.

9. Verfahren (500) gemäß einem der vorangegangenen Ansprüche, mit einem Schritt des Sendens eines Radarsignals, wobei im Schritt (502) des Erkennens in dem empfangenen Spektrum ein Echo erkannt wird, wobei im Schritt (504) des Bestimmens die physikalische Größe (212) unter Verwendung des Radarsignals und des Echos bestimmt wird.

10. Vorrichtung (102) zum Detektieren einer zukünftigen Annäherung oder eines Abstands zwischen zwei Verkehrsteilnehmern, wobei die Vorrichtung (102) die folgenden Merkmale aufweist:

eine Erkennungseinrichtung (202), die dazu ausgebildet ist ein erste Signals (208) und zumindest ein zweite Signals (210) in einem empfangenen elektromagnetischen Spektrum zu erkennen, wobei das erste Signal (208) und das zweite Signal (210) ein von einem Verkehrsteilnehmer (110) emittiertes und/oder reflektiertes elektromagnetisches Signal (116) repräsentieren;
eine Bestimmungseinrichtung (204), die dazu ausgebildet ist zumindest eine physikalische Größe (212) zwischen dem Verkehrsteilnehmer (110) und einer das Spektrum empfangenden Empfangseinrichtung (118) unter Verwendung des ersten Signals (208) und des zweiten Signals (210) zu bestimmen; und
eine Ermittlungseinrichtung (206), die dazu ausgebildet ist, die potenzielle Unfallsituation unter Verwendung der physikalischen Größe (212) zu ermitteln.

11. Computerprogramm, das dazu eingerichtet ist, das Verfahren gemäß einem der vorangegangenen Ansprüche auszuführen.

12. Maschinenlesbares Speichermedium, auf dem das Computerprogramm nach Anspruch 11 gespeichert ist.

# Fig. 1

# Fig. 2

# Fig. 3

110    114    124    300

126    302    102

# Fig. 4

408

406

116

404    402    400

...

**Fig. 5**

500

502

504

506

Europäisches
Patentamt

European
Patent Office

Office européen
des brevets

**EUROPÄISCHER RECHERCHENBERICHT**

Nummer der Anmeldung

EP 16 19 7242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Der Gemeinsamen: "Radarsysteme zur automatischen Abstandsregelung in Automobilen", <br><br> , <br> 22. Juli 1999 (1999-07-22), XP055222062, Gefunden im Internet: URL:http://www.smartmicro.de/fileadmin/user_upload/Documents/Publications/promo_inet.pdf [gefunden am 2015-10-19] * Seite 4, 3. Absatz, Seite 7, 2. Absatz, Seite 8, 1. Absatz, Para. 2.2.4, Abbildung 8, 11, 17 und 25, Para. 3.1, 3.2, 3.3 und 3.4; Seiten 20-77 * * Tabellen 1 und 2 auf Seiten 11 und 12) * <br> ----- | 1-12 | INV. <br> G01S5/02 <br> G01S5/06 <br> G01S13/52 <br> G01S13/87 <br> G01S13/93 |
| X | US 2002/005803 A1 (BAUGH KEVIN W [US] ET AL) 17. Januar 2002 (2002-01-17) * Absätze [0053], [0031], [0035]; Abbildungen 1,3 * <br> ----- | 1-12 | |
| | | | RECHERCHIERTE SACHGEBIETE (IPC) <br><br> G01S |

Der vorliegende Recherchenbericht wurde für alle Patentansprüche erstellt

| Recherchenort | Abschlußdatum der Recherche | Prüfer |
|---|---|---|
| München | 4. April 2017 | Metz, Carsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 7242

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2017

| Im Recherchenbericht angeführtes Patentdokument | Datum der Veröffentlichung | Mitglied(er) der Patentfamilie | Datum der Veröffentlichung |
|---|---|---|---|
| US 2002005803 A1 | 17-01-2002 | AU 5375901 A | 12-11-2001 |
| | | AU 2001253759 B2 | 29-06-2006 |
| | | CA 2407537 A1 | 08-11-2001 |
| | | EP 1295149 A2 | 26-03-2003 |
| | | EP 2065729 A2 | 03-06-2009 |
| | | IL 152432 A | 11-02-2009 |
| | | JP 3802422 B2 | 26-07-2006 |
| | | JP 2003532121 A | 28-10-2003 |
| | | KR 20030023862 A | 20-03-2003 |
| | | US 2002005803 A1 | 17-01-2002 |
| | | WO 0184181 A2 | 08-11-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2011007560 A